# EUROPEAN PATENT APPLICATION

(11) **EP 1 147 812 A1**
(43) Date of publication of application: **24.10.2001**
(21) Application number: 01109177.4
(22) Date of filing: 12.04.2001
(51) Int. Cl.: B01J 35/00

(54) **Photocatalytic powder, photocatalytic slurry, and polymer composition, coating agent, photocatalytic functional molded article and photocatalytic functional structure using the powder**

(30) Priority: 21.04.2000 JP 2000120229; 15.02.2001 JP 2001037799
(71) Applicant: Showa Denko Kabushiki Kaisha, Tokyo 105-8518 (JP)
(72) Inventor: Ito, Katsura, Shiojiri-shi, Nagano 399-6461 (JP); Hagihara, Hiroyuki, Toyama-shi, Toyama 931-8577 (JP)
(74) Representative: Strehl Schübel-Hopf & Partner

(57) **Abstract**

An object of the present invention is to provide a photocatalytic powder comprising titanium dioxide fine particles comprising anionically active substance, wherein the interfacial potential of the fine particle is from -100 to 0 mV in an aqueous environment at pH 5, a photocatalytic slurry containing the powder, and a polymer composition, a coating agent, a photocatalytic functional molded article and a photocatalytic functional structure using the powder.

## Description

### Technical field

The present invention relates to a material having photocatalytic activity, more specifically, the present invention relates to a photocatalytic powder material having photocatalytic activity, a slurry containing the photocatalytic powder, an organic polymer composition containing the photocatalytic powder, a photocatalytic functional molded article of the organic polymer composition, a coating agent containing the photocatalytic slurry, and a photocatalytic functional structure having provided on the surface thereof the polymer composition or the coating agent.

### Background Art

In recent years, photocatalytic fine particles using titanium dioxide are attracting an attention as an environmental cleaning material for antimicrobial, deodorization, antifouling, air cleaning, water cleaning and the like. The photocatalytic mechanism of titanium dioxide is considered attributable to the following mechanism. Upon irradiation of light on a titanium dioxide fine particle, an electron or a hole is generated inside the titanium dioxide fine particle and reacts with water or oxygen in the vicinity of the surface of a titanium dioxide fine particle to generate hydroxy radical or hydrogen peroxide and by virtue of strong oxidation reduction activity of this hydroxy radical or hydrogen peroxide, harmful organic substances are decomposed into carbon dioxide and water and thereby cleaned. Such photocatalytic activity of a titanium dioxide fine particle is thought to semipermanently continue as long as a titanium dioxide fine particle, light, water and oxygen are present.

By taking notice of this photocatalytic property of titanium dioxide, as a representative application example, kneading of titanium dioxide fine particles into an easily handleable medium such as fiber or plastic molded article or coating on the surface of a substrate such as cloth or paper is being made. However, decomposition or deterioration by the strong photocatalytic activity of titanium dioxide readily occurs not only on harmful organic materials or environmental pollutants but also on the medium itself such as fiber, plastic or paper and this is an obstacle to the durability in practical use. Due to easy handleability of the titanium dioxide fine particle, a coating material comprising a mixture of titanium dioxide fine particles and a binder has been developed, however, an inexpensive binder having durability sufficiently high to overcome such an action (obstacle) on the medium has not yet been found out.

JP-A-9-225319 (the term "JP-A" as used herein means an "unexamined published Japanese patent application") and JP-A-9-239277 disclose means for preventing and suppressing the deterioration of resin medium or the deterioration of binder due to the strong photocatalytic activity of titanium dioxide particle. The proposed means is a method of allowing a photo-inactive compound such as aluminum, silicon and zirconium to be supported on a titanium dioxide particle in an archipelago shape having a steric barrier so as to retard the photocatalytic activity. According to this method, the photo-inactive compound is supported in an archipelago shape, however, specific sites of the resin medium or the binder disadvantageously remain standing under the strong photocatalytic activity of titanium dioxide.

JP-A-10-244166 proposes a photocatalytic titanium dioxide obtained by coating a porous calcium phosphate film on the surface of titanium dioxide but in this case, the photocatalytic capability disadvantageously decreases due to the coated calcium phosphate film.

International Publication WO99/33566 discloses a powder material of titanium dioxide fine particles, where a porous coating film of calcium phosphate is formed on at least a part of the surface of a titanium dioxide fine particle and an anionic surfactant is present at the interface therebetween.

With respect to a slurry containing titanium dioxide having photocatalytic activity, JP-A-10-142008 discloses an anatase-type titanium oxide-containing slurry which is obtained by heat-treating a titania sol solution, a titania gel form or a titania sol-gel mixture in a closed vessel simultaneously with a pressurization treatment and then dispersing or stirring the treated product using an ultrasonic wave.

Also, JP-A-11-343426 discloses a photocatalytic coating material having excellent dispersion stability and specifically discloses a photocatalytic coating material containing, in a solvent, a silica sol and titanium oxide having a Raman spectrum peak in the range of 146 to 150 cm⁻¹ and being occupied by anatase type titanium dioxide in a ratio of 95% by mass or more.

Conventional techniques heretofore proposed cannot provide an industrially useful method for producing a photocatalytic powder material or slurry which can satisfy all of photocatalytic activity, when used in combination with an organic material, durability and dispersion stability.

### DISCLOSURE OF THE INVENTION

By taking account of these conventional techniques, the object of the present invention is to provide a photocatalytic powder material, a slurry containing the photocatalytic powder, an organic polymer composition containing the photocatalytic powder, a molded article of the organic polymer composition, a coating agent containing the slurry and a structure having provided on the surface thereof the organic polymer composition or the coating agent, which can effectively and profitably perform removal of malodor, decompositional removal of harmful substances or pollutants in air, water draining or cleaning treatment, or disinfectant or antifungal action (hereinafter collectively called "environmental cleaning activity") and at the same time, which can have high dispersion stability and therefore, can be greatly enhanced in the industrial utility.

Particularly, the present invention provides a photocatalytic powder and a photocatalytic slurry, which can exhibit excellent photocatalytic activity, durability and dispersion stability in the coating on the surface of fiber, paper or plastic material, in the kneading into such a material, or in the use for a coating composition.

### MEANS TO SOLVE THE PROBLEMS

As a result of extensive investigations to attain the above-described objects, the present inventors have found that these objects can be attained by a photocatalytic powder material comprising a titanium dioxide fine particle containing an anionically active substance, wherein the interfacial potential of the fine particle is from -100 to 0 mV in an aqueous environment at pH 5, and by a slurry containing the powder.

More specifically, the present invention comprises the following inventions.
(1) A photocatalytic powder comprising a titanium dioxide fine particles containing an anionically active substance, wherein the interfacial potential of the fine particle is from -100 to 0 mV in an aqueous environment at pH 5.
(2) The photocatalytic powder as described in 1 above, wherein the fine particle has a primary particle size of 0.001 to 0.2 µm.
(3) The photocatalytic powder as described in 1 or 2 above, wherein the anionically active substance is at least one substance selected from the group consisting of condensed phosphoric acid, organic sulfonic acid, sulfuric acid and hydrofluoric acid.
(4) An aqueous slurry containing the photocatalytic powder described in any one of 1 to 3 above.
(5) An organic polymer composition containing the photocatalytic powder described in any one of 1 to 3 above.
(6) A coating agent using the photocatalytic slurry described in 4 above.
(7) An organic polymer composition comprising the photocatalytic powder described in 5 above, wherein the organic polymer of the organic polymer composition is at least one selected from the group consisting of thermoplastic resin, thermosetting resin, synthetic resin, natural resin and hydrophilic polymer.
(8) An organic polymer composition comprising the photocatalytic powder described in 5 above, wherein the organic polymer composition is an article selected from the group consisting of a coating material, a coating composition, a compound and a masterbatch.
(9) The organic polymer composition containing a photocatalytic powder as described in 8 above, wherein the concentration of the photocatalytic powder in the organic polymer composition is from 0.01 to 80% by mass based on the entire mass of the composition.
(10) A photocatalytic functional molded article obtainable by molding the organic polymer composition containing a photocatalytic powder material described in any one of 7 to 9 above.
(11) The photocatalytic functional molded article as described in 10 above, which is a molded article selected from the group consisting of fiber, film and plastic.
(12) A photocatalytic functional structure having provided on the surface thereof the photocatalytic powder described in any one of 1 to 3 above.
(13) A photocatalytic functional structure having provided on the surface thereof the coating agent described in 6 above.

### MORE FOR CARRYING OUT THE INVENTION

The titanium dioxide for use in the present invention is fundamentally not limited on the crystal form or the production process thereof as long as it has photocatalytic activity. For example, a titanium dioxide fine particle obtained by a vapor phase reaction starting from titanium halide, a titanium dioxide fine particle or sol obtained by wet-hydrolyzing a titanic acid solution, or a burned product thereof, may be used.

The titanium dioxide fine particle for use in the present invention is not limited on the crystal form, as described above, however, from the standpoint of attaining high performance as a photocatalyst, anatase and brookite are preferred. The titanium dioxide fine particle may also be a composite crystal-system fine particle of these crystal forms or containing such a crystal.

The titanium dioxide for use in the present invention preferably has an average primary particle size of 0.001 to 0.2 µm, more preferably from 0.001 to 0.1 µm. If the average primary particle size is less than 0.001 µm, efficient production is difficult to attain and this is not practical, whereas if it exceeds 0.2 µm, the photocatalytic performance of the titanium dioxide greatly decreases.

In the present invention, it is important that the fine powder mainly comprises the above-described titanium dioxide, the titanium oxide contains an anionically active substance and the interfacial potential of the fine powder is from -100 to 0 mV in an aqueous environment at pH 5. The "anionically active substance" as used herein means a substance having a hydrophilic atom group showing anionic property in the molecule, the surface of which substance is readily rendered anionic in water due to its proton-donating property. Any substance satisfying these conditions may be used. For example, the substance having a hydrophilic atom group bearing anion in the molecule (particularly, Broensted base) is at least one substance selected from the group consisting of condensed phosphoric acid, organic sulfonic acid, sulfuric acid and hydrofluoric acid. Examples of the condensed phosphoric acid include pyrophosphoric acid, tripolyphosphoric acid, tetrapolyphosphoric acid, trimetaphosphoric acid, tetrametaphosphoric acid and hexametaphosphoric acid. Examples of the organic sulfonic acid include methanesulfonic acid, ethanesulfonic acid, benzenesulfonic acid, toluenesulfonic acid and dodecylbenzenesulfonic acid. Among these, condensed phosphoric acid is preferred.

The "mainly comprising titanium dioxide and containing an anionically active substance" means that an anionically active substance compounded with titanium dioxide is present in the vicinity of the surface of a fine particle, an anionically substance is adsorbed to the surface of a titanium dioxide fine particle, or an anionically active substance is present in the vicinity of the surface of titanium dioxide. The powder material may be in any of these states.

In the present invention, the interfacial potential means a potential difference generated at the interface between a solid particle and water in contact with each other when these perform a relative motion. This interfacial potential is generally determined, for example, by a method of loading an electric field to both ends of a cell containing water having dispersed therein fine powder to cause electrophoresis and measuring the migration speed. For the measurement of the migration speed, a direct observation method through a microscope, a rotary prism method, a laser Doppler method, a laser rotary grating method, an image analysis method or a mass measuring method may be used.

Other than the electrophoresis method, a precipitation potential method, an electroosmosis method, a streaming potential method and an ultrasonic method may be used. Among these, an electrophoretic light-scattering method is preferred, which is an electrophoresis method employing a laser Doppler speed measuring method. In the present invention, the interfacial potential at pH 5 must be from -100 to 0 mV, preferably from -50 to -10 mV. If the interfacial potential value exceeds 0, sufficiently high photocatalytic activity cannot be obtained and also, the dispersion stability is poor, whereas if the interfacial potential is less than -100 mV, sufficiently high photocatalytic activity cannot be obtained.

In the present invention, the anionically active substance may be sufficient if it is present in a ratio based on titanium dioxide such that the interfacial potential of the fine particle is from -100 to 0 mV in an aqueous environment at pH 5. For example, the anionically active substance is preferably in a ratio of 0.1 to 50 parts by mass, more preferably from 0.2 to 20 parts by mass, per 100 parts by mass of titanium dioxide. If the ratio of the anionically active substance is less than 0.1 part by mass, sufficiently high dispersion stability of the fine particle cannot be obtained, whereas if it exceeds 50 parts by mass, the fine particle greatly decreases in the capability as a photocatalyst. The method for allowing the anionically active substance to be present on the surface of titanium dioxide is also not particularly limited. For example, the anionically active substance may be added in the initial stage or on the way during the production of titanium dioxide, or the anionically active substance may be rendered to be present anew in the surface treatment step after the completion of the production of titanium dioxide.

In the photocatalytic powder, a metal such as platinum, rhodium, ruthenium palladium, silver, copper and zinc may be previously supported on the surface of a titanium dioxide fine particle. In this case, the titanium dioxide fine particle is more intensified in the environmental cleaning activity and the disinfectant or algicidal effect is also enhanced. The metal may also be supported on the raw material titanium dioxide or a step of allowing the metal to be supported may be provided in the process of incorporating the above-described anionically active substance.

The slurry of the present invention indicates a water dispersion comprising a photocatalytic powder material which is a fine particle mainly comprising a titanium dioxide fine particle and further containing an anionically active substance and in which the interfacial potential of the fine particle is from -100 to 0 mV in an aqueous environment at pH 5. A hydrophilic organic solvent may be added to this water dispersion.

The content ratio of the photocatalytic powder in the slurry is not particularly limited but is preferably, for example, from 0.01 to 50% by mass, more preferably from 1 to 40% by mass. If the content of the photocatalytic powder is less than 0.01% by mass, a sufficiently high photocatalytic effect may not be obtained after the coating, whereas if it exceeds 50% by mass, this causes not only a problem such as increase in viscosity but also is disadvantageous in view of profitability.

A photocatalytic functional structure may be produced by adding a freely selected binder to the above-described water dispersion (slurry) to form a coating agent and coating this on the surface of a structure of every kind which is described later. In the present invention, the binder material is not limited but, for example, at least one selected from hydrophilic polymers such as polyvinyl alcohol, sodium polyacrylate and poly(N-vinylacetamide), and inorganic materials such as zirconium compound may be used.

Examples of the zirconium compound include zirconium oxychloride, zirconium hydroxychloride, zirconium nitrate, zirconium sulfate, zirconium acetate, ammonium zirconium carbonate and zirconium propionate.

To speak specifically, the amount added of the binder in the coating agent is preferably, for example, from 0.01 to 20% by mass, more preferably from 1 to 10% by mass. If the content of the binder is less than 0.01% by mass, sufficiently high adhesion may not be attained after the coating, whereas if it exceeds 20% by mass, this causes not only a problem such as increase in viscosity but also is disadvantageous in view of profitability.

The photocatalytic powder of the present invention can be used as a composition by adding it to an organic polymer. The organic polymer which can be used here includes thermoplastic resin, thermosetting resin, synthetic resin, natural resin and hydrophilic polymer. By incorporating the above-described anionically active substance into the titanium dioxide, the occurrence of the organic polymer directly contacting with the active face (surface) of the photocatalyst is reduced and therefore, the organic polymer substrate itself is scarcely subject to decompositional deterioration.

Examples of this organic polymer include polyethylene, nylon 6, nylon 66, polyvinyl chloride, polyvinylidene chloride, polyester, polypropylene, polyethylene oxide, polyethylene glycol, polyethylene terephthalate, silicon resin, polyvinyl alcohol, vinyl acetal resin, polyacetate, ABS resin, epoxy resin, vinyl acetate resin, cellulose, cellulose derivatives, polyamide resin, polyurethane resin, polycarbonate resin, polystyrene rein, urea resin, fluororesin, polyvinylidene fluoride, phenol resin, celluloid, chitin, starch sheet, acrylic resin, unsaturated polyester, melamine resin, alkyd resin and rayon.

The organic polymer composition containing the photocatalytic powder for environmental cleaning of the present invention can be used in the form of a coating material, a coating composition, a compound or a masterbatch. The concentration of the photocatalyst in the organic polymer composition is from 0.01 to 80% by mass, preferably from 1 to 50% by mass, based on the entire mass of the composition. In this polymer composition, an absorbent such as activated carbon and zeolite may be added so as to enhance the effect of removing malodorous substances. In the present invention, a polymer molded article having a function of cleaning the environment can be obtained by molding the above-described polymer composition. Examples of the molded article of the composition include fiber, film and plastic molded article.

The polymer composition of the present invention has excellent durability and therefore, may also be used as a coating composition for a structure such as wall material, glass, billboard or road construction concrete. Furthermore, when the titanium oxide or polymer composition of the present invention is subjected to a surface treatment, even if this is coated on a structure (organic material) such as paper, plastic, cloth or wood, or on a body coating of a car or the like, its photocatalytic function can be fully brought out without causing any photocatalytic deterioration or destruction of the medium (structure or coating).

### Example

The present invention is described in greater detail below by referring to the Examples, however, the present invention should not be construed as being limited to these Examples.

### Example 1:

To 476 ml of previously weighed pure water, 0.01 g of sodium hexametaphosphate (extra pure reagent, produced by Junsei Kagaku Kogyo K.K.) was added. While stirring with a lab stirrer, the resulting mixture was heated and kept at a temperature of 98°C. Thereto, 36 g of an aqueous titanium tetrachloride solution (produced by SHOWA TITANIUM CO., LTD.) was added dropwise over 60 minutes. After the dropwise addition, the obtained white suspension was adjusted to pH 5 using an electrodialyser. A part of the thus-obtained photocatalytic slurry was sampled and the solid concentration was measured by a dry constant weight method and found to be 2.1% by mass. The dry powder was subjected to a structural analysis using an X-ray diffractometer, as a result, the obtained powder was brookite-type titanium oxide. Then, the obtained powder was analyzed by FT-IR (FT-IR1650, manufactured by Perkin Elmer), as a result, an absorption of metaphosphoric acid was observed, revealing the presence of an anionically active substance. Also, the primary particle size of the powder was determined from the measurement results of BET specific surface area and found to be 0.015 µm.

### Evaluation of Photocatalytic Activity

Then, a coating solution containing 3% by mass of this powder (using zirconium oxychloride as the binder and the amount added thereof was 20% by mass based on the powder) was prepared and coated on a commercially available glass plate by a flow coating method and on the surface thereof, a red ink was dropped. The thus-obtained sample was placed right under a commercially available black light and after lighting of the light, the relative red ink discoloration rate was measured and found to be 130.

### Evaluation of Resin Deterioration

Using 10 g of the photocatalytic powder prepared above and polyethylene terephthalate resin, a kneaded mixture having a titanium dioxide concentration of 20% was produced at a temperature of 280°C by means of a commercially available batch-system kneader (Laboplasto mill manufactured by Toyo Seiki K.K.). From the obtained compound, a specimen of 3 cmφ x 1 cm was manufactured using a heating press and the yellow degree (YI value according to ASTM-D1925) of the specimen was measured by a spectrocolorimeter (CM-2002, manufactured by Minolta K.K.), as a result, change for yellow was not observed.

### Evaluation of Dispersibility

Using a part of the photocatalytic slurry, the dispersion particle size was evaluated by a commercially available photon correlation ultrafine particle size distribution measuring apparatus (UPA, manufactured by Honeywell), as a result, found to be 0.17 µm in terms of the average particle size.

### Evaluation of Interfacial Potential

A part of the photocatalytic slurry was sampled and measured on the interfacial potential using a commercially available interfacial potential measuring apparatus (DELSA440, manufactured by Coulter K.K.) and found to be -35 mV.

### Example 2:

A photocatalytic powder containing an anionically active substance was produced in the same manner as in Example 1 except for using acidic sodium pyrophosphate (a product by Taihei Kagaku Sangyo K.K.) in place of sodium hexametaphosphate of Example 1. The thus-obtained photocatalytic powder was subject to the photocatalytic activity evaluation, the resin deterioration evaluation, the dispersion particle size evaluation and the interfacial potential evaluation in the same manner as in Example 1. The results obtained are shown in Table 1.

### Example 3:

A photocatalytic powder containing an anionically active substance was produced in the same manner as in Example 1 except for using orthophosphoric acid (extra pure reagent produced by Wako Junyaku K.K.) in place of sodium hexametaphosphate of Example 1. The thus-obtained photocatalytic powder was subject to the photocatalytic activity evaluation, the resin deterioration evaluation, the dispersion particle size evaluation and the interfacial potential evaluation in the same manner as in Example 1. The results obtained are shown in Table 1.

### Example 4:

In a 1 L-volume flask, 476 ml of pure water was weighed, heated while stirring with a lab stirrer and kept at a temperature of 98°C. Thereto, 36 g of an aqueous titanium tetrachloride solution (produced by SHOWA TITANIUM CO., LTD.) was added dropwise over 60 minutes. After the dropwise addition, the obtained white suspension was adjusted to pH 5 using an electrodialyser. To this solution, 0.1 g of sodium hexametaphosphate (extra pure reagent, produced by Junsei Kagaku Kogyo K.K.) was added. The resulting slurry was charged into a 2.4 L-volume pot mill previously filled with 2 kg of zirconia beads of 0.8 mm and mixed at a revolution number of 100 rpm to obtain a photocatalytic slurry containing an anionically active agent. A part of this slurry was sampled and the solid concentration was measured by a dry constant weight method and found to be 1.9% by mass. The dry powder was subjected to a structural analysis using an X-ray diffractometer, as a result, the obtained powder was brookite-type titanium oxide. Then, the obtained powder was analyzed by FT-IR (FT-IR1650, manufactured by Perkin Elmer), as a result, an absorption of metaphosphoric acid was observed, revealing the presence of an anionically active substance.

### Comparative Example 1:

In a 1 L-volume flask, 476 ml of pure water was weighed, heated while stirring with a lab stirrer and kept at a temperature of 98°C. Thereto, 36 g of an aqueous titanium tetrachloride solution (produced by SHOWA TITANIUM CO., LTD.) was added dropwise over 60 minutes. After the dropwise addition, the obtained white suspension was adjusted to pH 5 using an electrodialyser. A part of this slurry was sampled and the solid concentration was measured by a dry constant weight method and found to be 2.1% by mass. The dry powder was subjected to a structural analysis using an X-ray diffractometer, as a result, the obtained powder was brookite-type titanium oxide. Also, the primary particle size of the powder was determined from the specific surface area measured by a BET method and found to be 0.016 µm. Subsequently, the photocatalytic activity evaluation and the resin deterioration evaluation of the powder, and the dispersion particle size evaluation and the interfacial potential evaluation of the slurry were performed in the same manner as in Example 1. The results obtained are shown in Table 1.

### Comparative Example 2:

To 499 ml of pure water, 1 g of a commercially available photocatalytic powder material (ST-01, produced by Ishihara Sangyo Kaisha, Ltd.), and the resulting mixture was dispersed by a lab stirrer to obtain a photocatalytic slurry. Using original powder, the photocatalytic activity evaluation and the resin deterioration evaluation were performed in the same manner as in Example 1. Also, using the photocatalytic slurry obtained above, evaluations of dispersion particle size and interfacial potential were performed in the same manner as in Example 1. The results obtained are shown in Table 1.

### Comparative Example 3:

To 499 ml of pure water, 1 g of a commercially available titanium oxide for pigment (A220, produced by Ishihara Sangyo Kaisha, Ltd.), and the resulting mixture was dispersed by a lab stirrer to obtain a photocatalytic slurry. To this solution, 0.1 g of sodium hexametaphosphoric acid (extra pure reagent produced by Junsei Kagaku Kogyo K.K.) was added. The resulting slurry was charged into a 2.4 L-volume pot mill previously filled with 2 kg of zirconia beads of 0.8 mm and mixed at a revolution number of 100 rpm to obtain a photocatalytic slurry containing an anionically active agent. A part of this slurry was sampled and the solid concentration was measured by a dry constant weight method and found to be 1.9% by mass. Using the dry powder obtained here, the photocatalytic activity evaluation and the resin deterioration evaluation were performed in the same manner as in Example 1. Also, using the photocatalytic slurry obtained above, evaluations of dispersion particle size and interfacial potential were performed in the same manner as in Example 1. The results obtained are shown in Table 1.

### Comparative Example 4:

A photocatalytic powder material and a photocatalytic slurry were obtained in the same manner as in Example except for changing the amount added of sodium hexametaphosphate to 0.001 g. Using these, the evaluations of photocatalytic activity, resin durability, dispersion particle size and interfacial potential were performed. The results obtained are shown together in Table 1.

### Comparative Example 5:

A photocatalytic powder material and a photocatalytic slurry were obtained in the same manner as in Example except for changing the amount added of sodium hexametaphosphate to 0.7 g. Using these, the evaluations of photocatalytic activity, resin durability, dispersion particle size and interfacial potential were performed. The results obtained are shown together in Table 1.

**Table 1**

| | Anionically Active Agent | Photo-Catalytic Activity | Primary Particle Size(µm) | Dispersion Particle Size(µm) | Resin Durability | Interfacial Potential (mV) |
|---|---|---|---|---|---|---|
| Example 1 | Present | 130 | 0.015 | 0.17 | ○ | -35 |
| 2 | Present | 120 | 0.016 | 0.19 | ○ | -33 |
| 3 | Present | 115 | 0.016 | 0.20 | ○ | -28 |
| 4 | Present | 122 | 0.015 | 0.18 | ○ | -34 |
| Comparative Example 1 | None | 95 | 0.016 | Immeasurable | × | 30 |
| 2 | None | 80 | 0.008 | 0.65 | × | 27 |
| 3 | None | 10 | 0.15 | 0.78 | ○ | 29 |
| 4 | Present | 96 | 0.015 | 0.54 | × | 5 |
| 5 | Present | 98 | 0.015 | 0.25 | ○ | -105 |
| ○: In the yellow degree test of resin, change for yellow was not observed. | | | | | | |
| ×: In the yellow degree test of resin, change for yellow was observed. | | | | | | |

### INDUSTRIAL APPLICABILITY

The photocatalytic powder and slurry of the present invention are a useful material capable of effectively and profitably performing removal of malodor, decompositional removal of harmful substances or pollutants, water draining or cleaning treatment, or antibacterial or antifungal action. Also, the slurry containing the photocatalytic powder has excellent dispersion stability. Therefore, the utility in industry is greatly enhanced. Particularly, the present invention can provide a catalytic powder material and a catalytic slurry, which exhibit excellent photocatalytic activity, durability and dispersion stability in the coating on the surface of fiber, paper or plastic material, in the kneading into such a material, or in the use for a coating material composition.

## Claims

1. A photocatalytic powder comprising titanium dioxide fine particles comprising anionically active substance, wherein the interfacial potential of the fine particles is from -100 to 0 mV in an aqueous environment at pH 5.

2. The photocatalytic powder according to claim 1, wherein the fine particle has a primary particle size of 0.001 to 0.2 µm.

3. The photocatalytic powder according to claim 1 or 2, wherein the anionically active substance is at least one substance selected from the group consisting of condensed phosphoric acid, organic sulfonic acid, sulfuric acid and hydrofluoric acid.

4. An aqueous slurry containing the photocatalytic powder claimed in any one of claims 1 to 3.

5. An organic polymer composition comprising the photocatalytic powder claimed in any one of claims 1 to 3.

6. A coating agent using the photocatalytic slurry claimed in claim 4.

7. An organic polymer composition comprising the photocatalytic powder as claimed in claim 5, wherein the organic polymer of the organic polymer composition is at least one selected from the group consisting of thermoplastic resin, thermosetting resin, synthetic resin, natural resin and hydrophilic polymer.

8. The organic polymer composition comprising the photocatalytic powder as claimed in claim 5, wherein the organic polymer composition is an article selected from the group consisting of a coating material, a coating composition, a compound and a masterbatch.

9. The organic polymer composition comprising a photocatalytic powder as claimed in claim 8, wherein the concentration of the photocatalytic powder in the organic polymer composition is from 0.01 to 80% by mass based on the entire mass of the composition.

10. A photocatalytic functional molded article obtainable by molding the organic polymer composition comprising a photocatalytic powder material described in any one of claims 7 to 9.

11. The photocatalytic functional molded article as claimed in claim 10, wherein the molded article is selected from the group consisting of fiber, film and plastic.

12. A photocatalytic functional structure having provided on the surface thereof the photocatalytic powder claimed in any one of claims 1 to 3.

13. A photocatalytic functional structure having provided on the surface thereof the coating agent claimed in claim 6.
